# EUROPÄISCHE PATENTSCHRIFT

(11) **EP 3 875 197 B1**
(45) Veröffentlichungstag und Bekanntmachung des Hinweises auf die Patenterteilung: **27.07.2022**
(21) Anmeldenummer: 21160223.0
(22) Anmeldetag: 02.03.2021
(51) Int. Cl.: B23D 21/00, B23D 35/00

(54) **VERFAHREN ZUM ABTRENNEN VON ROHRSTÜCKEN**
METHOD FOR SEPARATING PIPE SECTIONS
PROCÉDÉ DE SÉPARATION DE PIÈCES TUBULAIRES

(30) Priorität: 06.03.2020 DE 102020106077
(43) Veröffentlichungstag der Anmeldung: 08.09.2021
(73) Patentinhaber: Welser Profile Austria GmbH, 3341 Ybbsitz (AT)
(72) Erfinder: Emsenhuber, Martin, 3242 Texingtal (AT); Redtensteiner, Andreas, 3340 Waidhofen a. d. Ybbs (AT); Sattler, Friedrich, 3341 Ybbsitz (AT); Spreitzer, Erich, 3341 Ybbsitz (AT); Wagner, Georg, 3340 Waidhofen a. d. Ybbs (AT)
(74) Vertreter: Grünecker Patent- und Rechtsanwälte PartG mbB

(56) Entgegenhaltungen:
- EP-A1- 0 870 564
- DE-C1- 10 029 195
- US-A- 2 653 664

## Beschreibung

Die vorliegende Erfindung betrifft ein Verfahren zum Abtrennen von Rohrstücken gemäß dem Oberbegriff des Anspruchs 1. Ein solches Verfahren ist aus DE 100 29 195 C1 bekannt.

Insbesondere beim Herstellen von Rohrstücken oder Rohrabschnitten in großer Stückzahl wird häufig aus einem Bandmaterial ein Rohrrohling geformt, der anschließend in vorbestimmte Längenabschnitte zerteilt wird. Ein solches Verfahren ist aus der US 2 250 931 A bekannt. Bei einem entsprechenden Ablängvorgang wird zunächst mittels eines im Wesentlichen tangential an das Rohr anfahrenden Stanzmessers einseitig eine Öffnung in das Rohr eingebracht. Anschließend wird mit einem quer in die zuvor hergestellte Öffnung einfahrendem Stanzmesser der Abtrennvorgang durchgeführt. Bei einer Variante weist das Stanzmesser einen sich verändernden Keilwinkel auf, der zunehmend größer wird. Das "Aufschlitzen" und Trennen erfolgt bei diesem klassischen Verfahren in der Praxis an ein und derselben Stopp-Position. Beim "Aufschlitzen" des Rohres durch das Messer wird in das Rohr ein Drehmoment eingebracht. Mit dieser Form des Schnittes (kein Gegenhalt/keine Matrize innen) und mit der Verdrehung ist kein gratarmer Schnitt möglich. Generell ist dieses Verfahren für höchstfeste Stähle und für Rohre mit engen Toleranzen ungeeignet. Neben Gratbildung kommt es zu Deformation im Schnittbereich und zu erhöhtem Werkzeugverschleiß.

Die DE 44 21 811 A1 befasst sich ebenfalls mit der Ablängung eines Hohlprofils. Damit auf das Hohlprofil kein Drehmoment beim Einstanzen einer seitlichen Öffnung auftritt, werden mittels eines Schlitzmessers, das zwei im Abstand zueinander angeordnete Hackmesser aufweist, in gegenüberliegende Randbereiche des Hohlprofils gegenüberliegende Schlitze eingebracht. Anschließend wird mittels eines oberen Stanzmessers, das in den oberen Schlitz einfährt, das Hohlprofil etwa bis zur Mitte abgeschert. Abschließend fährt ein unteres Stanzmesser nach oben in den unteren Schlitz ein und schert das Hohlprofil vollständig ab. Die verschiedenen Messer werden über Kulissen gesteuert an derselben Werkzeugposition in das Profil eingefahren. Ein gratarmer Schnitt ist auch mit diesem Verfahren wegen fehlendem Gegenhalt nicht möglich. Dieses Verfahren ist für enge Toleranzen und für höchstfeste Stähle ungeeignet. Ein weiteres Verfahren zum Ablängen von Rohren ist z.B. aus der DE 19749281 A1 bekannt. Bei diesem Verfahren wird ein Bandmaterial zu einer Rohrform mit aneinanderstoßenden Längskanten umgeformt und die Stoßkanten miteinander verschweißt. Für die Abtrennung der Rohrabschnitte werden zuvor in das Bandmaterial in definierten Ablängpositionen Querschlitze eingestanzt. Beim anschließenden Umformen erstrecken sich diese Querschlitze über einen beträchtlichen Teil des Umfangs, so dass nur noch ein Restbestandteil des verbleibenden Materials vorhanden ist, das für einen nachfolgenden Stanzvorgang eine möglichst flache Form einnimmt. Der verwendete Stanzstempel ist sehr schmal gehalten und fährt in den Schlitz ein und trennt mit seiner an die Innenkontur des Rohrs angepassten Schneide und mit Hilfe entsprechender schalenförmiger Schnittmatrizen den Rest des Materials heraus. Dieser Vorgang hat sich im Prinzip bewährt, weil aufgrund des linear ein- und ausfahrenden Stanzstempels und der Matrizen sichergestellt ist, dass der Schnittabfall nicht in das Innere der verbleibenden Rohre fallen kann. Allerdings sind die Belastungen am relativ dünnen Stanzstempel verhältnismäßig hoch und es kommt zu einer ungleichförmigen Belastung des Rohrrohlings bei diesem Vorgang.

Die DE 10 2010 008 246 A1 befasst sich ebenfalls mit einem Verfahren und einer Vorrichtung zum Trennen von Rohren. Ein Anreißmesser erzeugt zunächst seitlich in das Rohr einen Schlitz. Anschließend fährt ein Trennmesser quer in diesen Schlitz ein und trennt den gewünschten Rohrabschnitt ab. Das Trennmesser arbeitet spanlos und weist eine besondere Form auf. Der Keilwinkel des Trennmessers vergrößert sich und geht in die Gegenrichtung über.

Der vorliegenden Erfindung liegt daher die Aufgabe zugrunde, ein Verfahren zum Abtrennen von Rohrstücken bereitzustellen, das stabiler ist und eine größere Präzision mit geringerem Kraftaufwand ermöglicht.

Zur Lösung dieser Aufgabe wird ein Verfahren gemäß Anspruch 1 bereitgestellt. Dieses Verfahren zum Abtrennen von Rohrstücken umfasst die folgenden Schritte:
Bereitstellen eines Rohrrohlings mit mindestens einem in einer vorbestimmten Ablängposition angeordneten, sich in Umfangsrichtung des Rohrrohlings erstreckenden Ablängschlitz, wobei der Ablängschlitz einen Öffnungswinkel von < 180° (kleiner 180°) aufweist,

Einfahren eines in Längsrichtung des Ablängschlitzes breiter werdenden Stanzmessers quer zur Längserstreckung des Rohrrohlings in den Ablängschlitz, wobei das Stanzmesser einen Keilwinkel aufweist, der zumindest im Bereich der anfänglichen Aufspreizung des Ablängschlitzes durch das Stanzmesser kleiner ist als der Öffnungswinkel, und

Einschneiden des verbleibenden Materials in Verlängerung des Ablängschlitzes mittels des weiter quer zur Längserstreckung des Rohrrohlings einfahrenden Stanzmessers, wobei die Querkanten des Ablängschlitzes jeweils einen vorstehenden Zentrierlappen aufweisen, der einen auflaufenden, sich beim Einfahren des Stanzmessers verstärkenden Aufspreizkontakt bewirkt.

Das erfindungsgemäße Verfahren verwendet ein Stanzmesser, welches mit seinen Seiten in das Material einschneidet und nicht mit größerer Kraft einen deutlich vergrößerten Materialanteil auf einen Schlag heraustanzt. Hierdurch ergeben sich mehrere Vorteile. Zum einen ist der Rohrrohling aufgrund des kleineren Ablängschlitzes wesentlich stabiler und es kann daher auch maßhaltiger gearbeitet werden. Darüber hinaus ist die Belastung am Stanzmesser weniger stark. Der Ablängschlitz erzeugt demnach ein kleineres Fenster, in das das Stanzmesser eintaucht, mit seinen Schneidseiten sich in dem Ablängschlitz zentriert und aufgrund der Winkelverhältnisse anfängt, aufzuspreizen. In diesem Zusammenhang ist die Arretierung der beiden Keilseiten des Stanzmessers bereits als Bestandteil der Aufspreizung anzusehen. Hierdurch ergibt sich eine gute Zentrierung des Stanzmessers für den anschließenden Schneidvorgang. Die vorgegebenen Winkelverhältnisse zwischen dem Öffnungswinkel des Ablängschlitzes und dem anfänglichen Keilwinkel, sorgt dafür, dass das verbleibende Material beim Einschneidvorgang nach außen gedrückt wird und somit nicht in das Innere des Rohrrohlings bzw. des Rohrstücks gelangt. Mit diesem Verfahren können sehr effektiv und mit hoher Präzision sowie in großer Stückzahl Rohrstücke vorbestimmter Länge hergestellt werden. Dieses Verfahren kann auch Bestandteil eines Durchlaufverfahrens sein. Der bevorzugt im Wesentlichen linear ausgeführte Schneidvorgang ist sehr schnell durchführbar und eignet sich auch für die Massenproduktion. Das Einschneiden erfolgt bevorzugt an beiden Enden des Ablängschlitzes, vorzugsweise gleichzeitig und gleichmäßig. Damit ein besseres Zentrieren und anfängliches Aufspreizen stattfindet, weisen die Querkanten des Ablängschlitzes jeweils eine vorstehenden Zentrierlappen auf, der einen auflaufenden, sich beim Einfahren des Stanzmessers verstärkenden Aufspreizkontakt bewirkt. Der Zentrierlappen bringt gewisse Federeigenschaften mit sich, so dass dieser auf den Schneidkanten des Stanzmessers aufläuft, gestaucht wird, bzw. sich nach außen wegbiegt. Hierdurch erfolgt eine gute Zentrierung und Arretierung des Stanzmessers im Ablängschlitz, so dass es zu einem gleichmäßigen Schneidvorgang auf beiden Seiten des Ablängschlitzes kommt. Bevorzugt vergößert sich der Querschnitt eines Zentrierlappens von dessen freiem Ende zum Anbringende.

Die Verwendung von am Umfang angeordneten, kleineren Ablängschlitzen ist zwar bereits aus der DE 10 2017 120292 A1 bekannt; allerdings muss bei dem dort beschriebenen rotatorischen Verfahren das in das Rohr eingebrachte Drehmoment mittels beachtlicher Klemmung des Rohres kompensiert werden. Der gesamte Trennvorgang wird daher kompliziert, benötigt stabilere und größere Maschinen und ist vergleichsweise langsam.

Günstigerweise kann der Ablängschlitz einen Öffnungswinkel im Bereich von 30° bis 70°, bevorzugt 35° bis 55°, aufweisen. Hierdurch ergibt sich auch die Vorgabe für den Keilwinkel und es kommt zu einer guten Zentrierung des Schneidmessers im Ablängschlitz mit gleichmäßiger Aufspreizung und anschließender Einschneidung an den gegenüberliegenden Querseiten des Ablängschlitzes.

Um einen stabilen Vorgang ausführen zu können, der entsprechend maßhaltig ist, ist gemäß einer weiteren Variante vorgesehen, dass beim Einschneiden des verbleibenden Materials ein ziehender Schnitt über einen Umfangswinkel von mindestens 180° durchgeführt wird. Das bedeutet, dass mindestens die Hälfte des Materials stehenbleibt, weshalb die beiden angrenzenden Rohrabschnitte eine stabile Lage zueinander einnehmen können. Bevorzugt beträgt der Winkelbetrag für den ziehenden Schnitt sogar mindestens 210° und weiter bevorzugt sogar mindestens 240°. Wichtig ist hierbei, dass das überschüssige verbleibende Material von dem Stanzmesser sukzessive aus dem Rohrrohling herausgeschält wird.

Bevorzugt kann das Stanzmesser einen ersten Keilwinkel im Bereich der anfänglichen Aufspreizung und einen zweiten Keilwinkel im Hauptbereich des Einschneidevorgangs aufweisen, wobei der zweite Keilwinkel größer ist als der erste Keilwinkel. Die Keilwinkel können sich auch in ihren jeweiligen Abschnitten verändern. Wichtig ist hauptsächlich, dass die anfängliche Arretierung bzw. anfängliche Aufspreizung mit einem kleineren Keilwinkel stattfindet, als der Großteil des ziehenden Schnitts. Der Keilwinkel kann auch an die veränderte Winkellage des jeweils zugehörigen, jeweils einzuschneidenden Umfangsabschnitts des Rohrrohlings angepasst sein, sich z.B. stufenweise oder stetig ändern.

Günstigerweise können hierbei der erste Keilwinkel im Bereich von 20° bis 30° und der zweite Keilwinkel im Bereich von 35° bis 45° liegen. Mit dem ersten Keilwinkel erfolgt eine sehr gute Zentrierung bzw. Arretierung des Stanzmessers im Ablängschlitz und günstige Winkelbedingungen für die anfängliche Aufspreizung, während der ziehende Schnitt hauptsächlich mit dem größeren Keilwinkel, d.h. einem stabileren Abschnitt des Stanzmessers, durchgeführt wird. Hierdurch ist das Stanzmesser auch länger haltbar.

Gemäß einer weiteren bevorzugten Verfahrensvariante kann im Rohrrohling an der Ablängposition ein dem Ablängschlitz diametral gegenüberliegender und von diesem getrennter Gegenschlitz angeordnet werden, wobei das Stanzmesser zuerst in den Ablängschlitz und anschließend in den Gegenschlitz einfährt, und wobei das Stanzmesser bevorzugt einen Keilwinkel aufweist, der zumindest im Bereich der anfänglichen Aufspreizung des Gegenschlitzes durch das Stanzmesser kleiner ist als der Öffnungswinkel des Gegenschlitzes. Bei der Verwendung kleiner Keilwinkel ist die Länge der jeweiligen Schneidkanten relativ lang, so dass der vordere Abschnitt des Stanzmessers mit der Innenseite des Rohrrohlings kollidieren könnte. Um hier freier gestalten zu können, ist bevorzugt ein fensterartiger Gegenschlitz vorgesehen, durch den eine solche Kollision zumindest anfänglich verhindert wird. Es lassen sich demnach besonders vorteilhafte ziehende Schnitte ausführen. Bevorzugt kann der Gegenschlitz einen Öffnungswinkel im Bereich von 40° bis 80°, und weiter bevorzugt im Bereich von 50° bis 70°, aufweisen. Der Gegenschlitz weist bevorzugt eine ähnliche Größe auf wie der Ablängschlitz.

Gemäß einer weiteren Verfahrensvariante ist vorgesehen, dass beim Einschneiden des verbleibenden Materials, zunächst ausgehend vom Ablängschlitz, ein ziehender Schnitt und anschließend, ausgehend vom Gegenschlitz, ein entgegenkommender ziehender Schnitt durchgeführt wird. Das bedeutet, dass ab einem bestimmten Eintauchen des Stanzmessers, dieses auch mit dem Gegenschlitz arretiert und ein anfängliches Aufspreizen bis zur Ausführung eines ziehenden Schnitts durchgeführt wird. Es kommen sich demnach zwei Enden des entstehenden Spans auf den jeweiligen Seiten der beiden Schlitze entgegen. Die Kraftausübung erfolgt also immer von den Schlitzen weggerichtet.

Günstigerweise können die vorstehenden Zentrierlappen des Ablängschlitzes eine Art Dreiecksform mit aufeinander zu weisenden Spitzen für einen auflaufenden, sich verstärkenden Aufspreizkontakt aufweisen. Aufgrund der Dreiecksform verstärkt sich bei einem weiteren Einfahren des Stanzmessers der Kontakt und somit die Arretierung auf dem Stanzmesser. Die Kontaktkraft wird also zunehmend größer und tritt nicht schlagartig in voller Höhe auf. Dies begünstigt zusätzlich ein Aufspreizen nach außen und somit eine günstige Spanform. Bei einer Dreiecksform (gleichmäßige Blechdicke vorrausgesetzt) vergrößert sich der Querschnitt zunehmend von dem freien Ende eines Zentrierlappens zu dessen Anbringende.

Eine weitere Verfahrensvariante sieht vor, dass zum Bereitstellen des Rohrrohlings ein Bandmaterial in vorbestimmten Ablängpositionen mit einem Ablängschlitz oder einem Ablängschlitz und einem später am Rohrrohling diametral gegenüberliegenden Gegenschlitz, bevorzugt mittels eines Stanzvorgangs, versehen wird, wobei das Bandmaterial quer zur Längserstreckung in eine Rohrform gebracht und die Längsstoßkanten miteinander verbunden werden. Bei Verwendung eines Metallmaterials, bevorzugt eines Stahlmaterials, können die Längsstoßkanten miteinander verschweißt werden, z.B. Laserschweißen. Es ist somit eine Herstellung von Rohrstücken in einer Art getaktetem Durchlaufverfahren möglich. Bei mitfahrender Stanzeinheit ist auch ein kontinuierlicher Herstellungsprozess durchführbar. Die Schlitze können somit gratarm vorgestanzt werden, insbesondere, weil eine auch innen abstützende Gegenmatrize verwendbar ist. Bevorzugt wird der Ablängschlitz anschließend im Trennbereich z.B. durch einen optischen Sensor erkannt, der Rohrrohling wird gestoppt und das Stanzmesser fährt durch. Bevorzugt kann sich am Rohrrohling zur Verbindung der Längskanten eine Schweißnaht befinden, weshalb dann günstigerweise der oder die Schlitz(e) versetzt zur Schweißnaht angebracht werden, vorteilhafterweise sind die Schweißnaht oben und der oder die Schlitz(e) seitlich angebracht. Diese sollten möglichst klein sein (kleiner Winkel) damit das Schweißen ohne Schwankungen erfolgen und die Geometrie in engen Toleranzen gehalten werden kann, aber gerade so groß damit das Aufspreizen(Hinausbeulen) der Zentrierlappen beim Durchlauf des Stanzmessers gut funktioniert.

Bevorzugt kann das Stanzmesser im Anschluss an den Hauptschneidbereich eine Spanmitnahmekerbe aufweisen, deren Spanaufnahmeöffnung in Einfahrrichtung des Stanzmessers nach vorne weist. Die Spanaufnahmekerbe sorgt dafür, dass der Span in eine bestimmte Richtung wegbewegt wird, bzw. sich in gewünschter Weise verformt, z.B. aufrollt etc.

Um einen möglichst sauberen Abtrennvorgang bereitzustellen, kann der Rohrrohling auf beiden Seiten des Ablängschlitzes und gegebenenfalls des Gegenschlitzes in einer ringförmigen Schneidmatrize gehalten sein, wobei das Stanzmesser zwischen die beiden Schneidmatrizen einfährt. Der Schneidvorgang erfolgt somit zwischen dem Stanzmesser und den jeweiligen Schneidmatrizen, wodurch ein sehr maßhaltiger und sauberer, insbesondere gratfreier, Schnitt möglich ist.

Darüber hinaus bezieht sich die vorliegende Erfindung auf die Verwendung eines Rohrrohlings mit mindestens einem, in einer vorbestimmten Ablängposition angeordneten, sich in Umfangsrichtung des Rohrrohlings erstreckenden Ablängschlitz in einem Verfahren nach einem der Ansprüche 1 bis 12. Mittels solcher Rohrrohlinge können mit großer Präzision und Schnelligkeit Rohrstücke in bevorzugt großer Stückzahl hergestellt werden.

Des Weiteren bezieht sich die Erfindung auf die Verwendung eines Stanzmessers mit einem an einem in einem Rohrrohling angebrachten Ablängschlitz angepassten Keilwinkel mit Zentrier-, anfänglicher Aufspreiz- und ziehender Schnittfunktion in einem Verfahren nach einem der Ansprüche 1 bis 12. Das Stanzmesser ist demnach so ausgestaltet, dass es optimal in dem Verfahren eingesetzt werden kann und für eine hohe Trenngüte sorgt.

Im Folgenden wird ein Ausführungsbeispiel der vorliegenden Erfindung anhand von Zeichnungen näher erläutert. Es zeigen:
- Fig. 1: eine perspektivische, schematische Zeichnung einer Stanzvorrichtung zum Abtrennen von Rohrstücken,
- Fig. 2: eine schematische Vorderansicht zur Erklärung der Winkelverhältnisse am Rohrrohling und dem Stanzmesser,
- Fig. 3: eine Draufsicht auf ein vorbereitetes Bandmaterial zum Herstellen eines Rohrrohlings,
- Fig.4a-4g: schematische Darstellung des Schneidvorgangs in aufeinanderfolgenden Schnittstufen und
- Fig. 5a-5d: einen Rohrrohling in perspektivischer Darstellung in unterschiedlichen Verformungsstufen während des Schnittvorgangs.

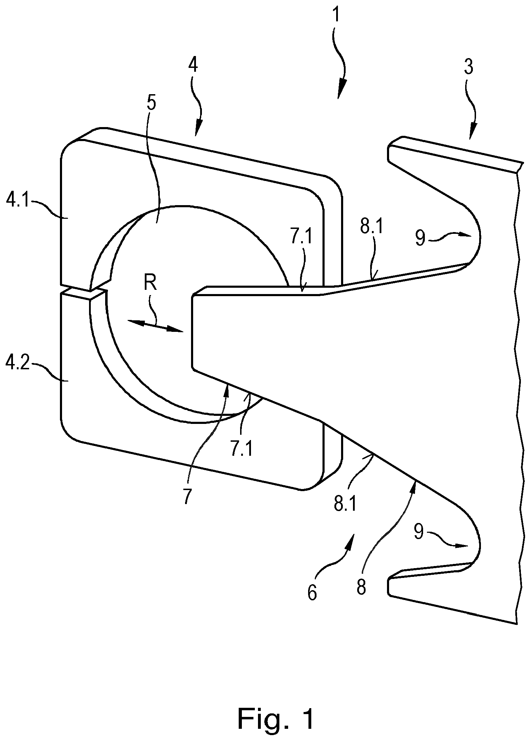

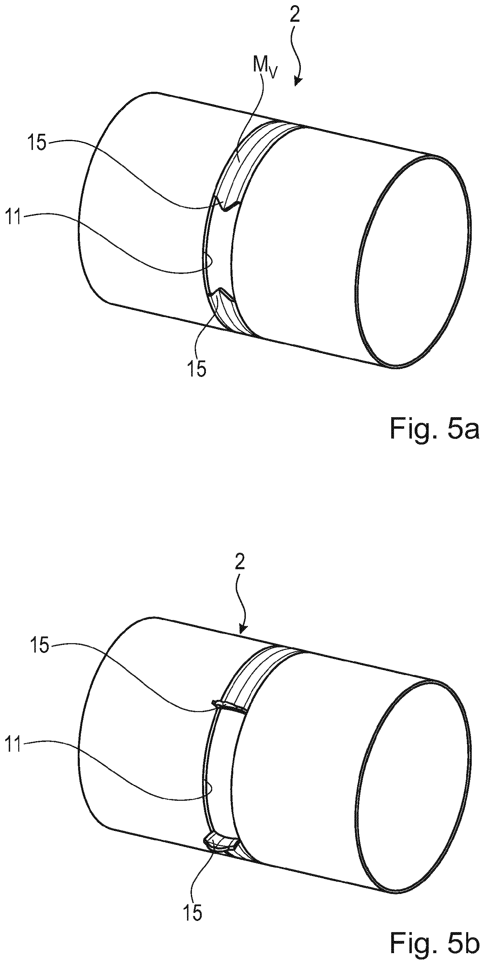

In Fig. 1 ist ein Teil des Werkzeugs 1 dargestellt, mit dem ein Abtrennen von Rohrstücken von einem Rohrrohling 2 (siehe Fig. 5a) erfolgt. Das Werkzeug 1 umfasst im Wesentlichen ein in linearer Richtung R hin und her bewegbares Stanzmesser 3 und zwei ringförmige Matrizen 4 (von denen nur eine dargestellt ist). Die beiden Matrizen 4 sind parallel und koaxial zueinander angeordnet und das Stanzmesser 3 fährt in den Zwischenraum zwischen die beiden Matrizen 4 ein und aus. Jede Matrize 4 besteht aus zwei Matrizenhälften 4.1 und 4.2. Der Rohrrohling 2 wird durch die kreisförmige Öffnung 5 der Matrizen 4 hindurchgeschoben. Entsprechend ist die Größe der Matrizenöffnung 5 an den Durchmesser des Rohrrohlings 2 angepasst. Nicht näher dargestellt sind Einrichtungen, mit denen der Rohrrohling 2 vorgeschoben, in seiner Winkellage positioniert und in einer Ablängposition festgehalten wird. Sowohl das Stanzmesser 3 als auch die Matrizen 4 sind aus entsprechend verschleißbeständigem Material, insbesondere Werkzeugstahl oder einem Sinterwerkstoff, hergestellt und weisen die notwendige Härte auf.

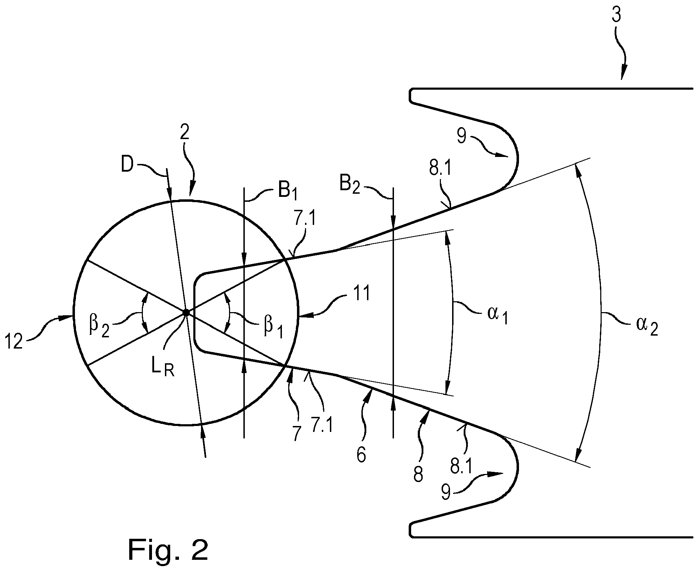

Das Stanzmesser 3 weist einen Hauptschneidbereich 6 auf, der im vorliegenden Ausführungsbeispiel aus zwei aneinander angrenzenden Keilabschnitten 7 und 8 besteht, die in der Seitenansicht jeweils in etwa eine Trapezform aufweisen. Die Keilabschnitte 7 und 8 sind auf beiden Seiten mit jeweiligen Schneidkanten 7.1 und 8.1 versehen, die entsprechend mit dem Rohrrohling 1 bearbeitend in Kontakt treten. Der erste Keilabschnitt 7 weist einen Keilwinkel α₁ von ca. 20° (siehe Fig. 2) und der zweite Keilabschnitt 8 einen Keilwinkel α₂ von ca. 40° auf. Im Anschluss an den zweiten Keilabschnitt 8 ist auf beiden Seiten jeweils eine Spanmitnahmekerbe 9 vorgesehen. Die Spanmitnahmekerbe 9 weist in der Seitenansicht in etwa eine V-Form mit stark abgerundetem Kerbgrund auf, wobei der eine Schenkel der V-Form im Wesentlichen in die Schneidkante 8.1 übergeht.

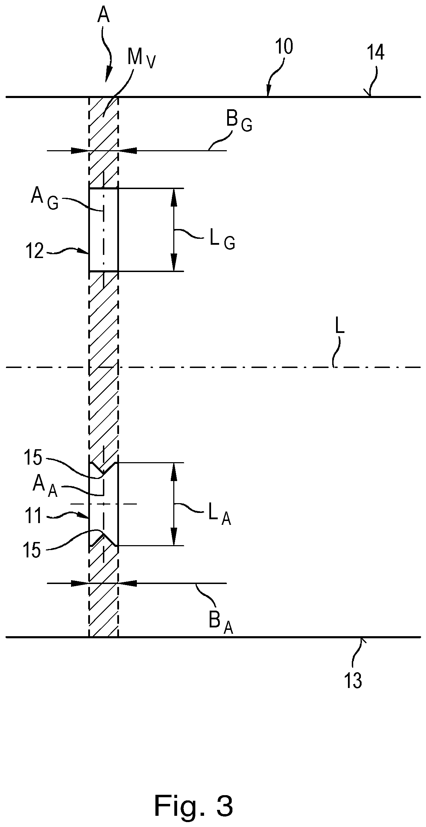

Der Rohrrohling 2 (siehe Fig. 5a) besteht aus einem Stahlmaterial und wird aus einem Bandmaterial 10 aus Stahl (siehe Fig. 3) hergestellt. Das Bandmaterial 10 weist schon die entsprechende Dicke für den Rohrrohling 2 auf und wird von einer Rolle abgewickelt und anschließend einem Stanzvorgang zugeführt. In vorbestimmten Ablängpositionen A werden in das Bandmaterial 10 ein Ablängschlitz 11 und ein Gegenschlitz 12 ausgestanzt. Der Ablängschlitz 11 weist eine Länge L_{A} und der Gegenschlitz 12 eine Länge L_{G} auf, die im Wesentlichen gleich groß sind. Die Längsachsen A_{A} des Ablängschlitzes 11 und A_{G} des Gegenschlitzes 12 verlaufen senkrecht zur Längsachse L des Bandmaterials 10. Die Längsachsen A_{A} und A_{G} fluchten miteinander. Die Breiten B_{A} des Ablängschlitzes 11 und B_{G} des Gegenschlitzes 12 sind im Wesentlichen gleich groß. Es kann jedoch von Vorteil sein, dass die Breite B_{G} zur Erhöhung der Prozesssicherheit etwas größer ist. In der Fig. 3 ist mit gestrichelter Linie und mit Schraffur das verbleibende Material Mv dargestellt, welches später bei dem Abtrennvorgang mittels des Schneidmessers 3 entfernt wird.

Die Schlitze 11 und 12 werden jeweils mittig zwischen der Längsachse L des Bandmaterials 10 und der jeweils nächstliegenden Längskante 13, 14 des Bandmaterials 10 ausgestanzt. Das Ausstanzen der Schlitze 11 und 12 erfolgt mit innen abstützender Gegenmatrize uns somit besonders gratarm. Im Anschluss an den Einstanzvorgang der fensterartigen Schlitze 11 und 12 erfolgt ein Umformvorgang des Bandmaterials 10 in eine Rohrform, so dass die Längskanten 13 und 14 einander gegenüberliegen. Nachfolgend erfolgt ein Verschweißen der Längskanten 13, 14, z.B. mittels Laserschweißen. Der Ablängschlitz 11 und der Gegenschlitz 12 liegen dann exakt diametral gegenüber und jeweils um 90° zu den verschweißten Längskanten 13 und 14 versetzt.

Der Ablängschlitz 11 weist an beiden Querkanten jeweils einen nach innen vorstehenden Zentrierlappen 15 auf. Hierdurch verkürzt sich die Länge L_{A} des Ablängschlitzes 11 stetig zur Mitte hin. Die Spitze des dreieckförmigen Lappens 15 ist leicht abgerundet. Darüber hinaus ist die Breite des Zentrierlappens 15 etwas geringer als die Breite B_{A} des Ablängschlitzes 11. Die Verkürzung der Länge L_{A} durch die Zentrierlappen 15 beträgt in der Mitte ca. 20 % (liegt im Bereich von 10 % bis 25 %).

In der Fig. 5a (und in der Folge Fig. 5b-5d) sind in der Verlängerung der Längskanten des Ablängschlitzes 11 Linien eingezeichnet, die jedoch nur der Verdeutlichung des herauszutrennenden verbleibenden Materials Mv dienen. Prinzipiell ist es jedoch möglich, das Bandmaterial 10 auch mit das Bandmaterial 10 nicht vollständig durchtrennenden Kerbschlitzen zu versehen.

In den Fig. 5a-5d ist ein Rohrrohling 2 mit nur einer Ablängposition A gezeigt. Dies ist nur beispielhaft, denn das Verfahren eignet sich auch als Durchlaufverfahren zur Herstellung von vielen Rohrstücken, so dass der Rohrrohling 2 beliebig lang sein kann mit nebeneinander in den jeweiligen Ablängpositionen A angeordneten Ablängschlitzen 11 und zugehörigen Gegenschlitzen 12. Auch die Länge der Rohrstücke kann beliebig variieren, so dass auch Rohrstücke von z.B. mehreren Metern Länge erzeugt werden können.

Nach dem Erzeugen des Rohrrohlings 2 weist der Ablängschlitz 11 einen Öffnungswinkel β₁ von ca. 45° (kleiner als 180°) auf. Der Öffnungswinkel β₁ wird zwischen den Spitzen der Zentrierlappen 15 gemessen. Der Scheitelpunkt des Öffnungswinkels β₁ liegt auf der Längsachse L_{R} des Rohrrohlings 2. Der Gegenschlitz 12 weist einen Öffnungswinkel β₂ auf, der in etwa 55° beträgt und demnach etwas größer ist als der Öffnungswinkel β₁. Grund hierfür sind die fehlenden Zentrierlappen 15. Es wird demnach insgesamt verbleibendes Material in einem Winkelbereich am Umfang von ca. 260° (größer als 180°) herausgetrennt.

Für den Abtrennvorgang wird der Rohrrohling 2 so positioniert, dass die Bewegungsrichtung R des Stanzmessers 3 exakt mittig zu den beiden fluchtenden Schlitzen 11 und 12 liegt.

Aus den obigen Größenangaben ergibt sich, dass der Öffnungswinkel β₁ des Ablängschlitzes 11 größer ist als der Keilwinkel α₁ des ersten Keilabschnittes 7. Die Breite B₁ des ersten Keilabschnittes 7 variiert entsprechend der Keilform von einem Betrag, der kleiner ist als die lichte Weite zwischen den Zentrierlappen 15 des Ablängschlitzes 11 und einem Betrag, der entsprechend größer ist, bevorzugt etwas größer ist, als die Länge L_{A} des Ablängschlitzes 11. Entsprechend variiert die Breite B₂ des zweiten Keilabschnitts 8 von einem Betrag, der der größten Breite B₁ des ersten Keilabschnitts 7 entspricht zu einem Betrag, der geringfügig größer ist als der Außendurchmesser D des Rohrrohlings 2. Im vorliegenden Fall ist der Keilwinkel α₂ des zweiten Keilabschnitts 8 ebenfalls kleiner als der Öffnungswinkel β₁ des Ablängschlitzes 11, aber auf jeden Fall kleiner als der Öffnungswinkel β₂ des Gegenschlitzes 12.

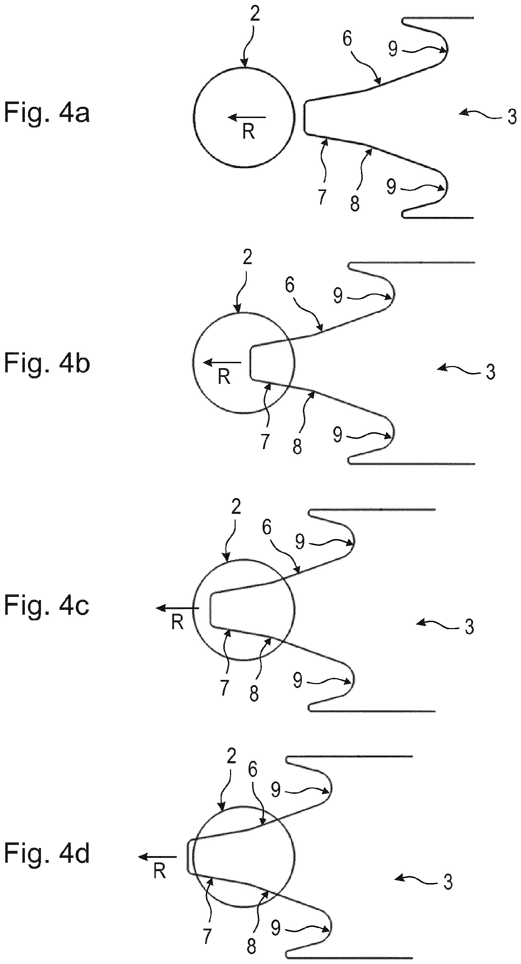

Im Folgenden wird der Abtrennvorgang von Rohrstücken mittels des oben beschriebenen Werkzeugs 1 und des entsprechend erzeugten Rohrrohlings 2 unter Zuhilfenahme der Fig. 4a-4g und 5a-5d näher erläutert.

Bevorzugt erfolgt die Herstellung der Rohrstücke im getakteten Durchlaufverfahren. Es ist jedoch auch möglich, das Werkzeug 1 entsprechend der Vorschubrichtung mit zu verfahren, so dass auch ein kontinuierlicher Vorgang möglich ist.

Der Rohrrohling 2 wird entsprechend durch die beiden Matrizen 4 hindurchgeschoben und hinsichtlich seiner Ablängposition A so positioniert, dass die beiden Schlitze 11 und 12 entsprechend zur Bewegungsachse (entspricht der Bewegungsrichtung R) des Stanzmessers 3 ausgerichtet sind. Bevorzugt erfolgt dieser Vorgang mit Hilfe von einem optischen Sensor, der die Position zumindest eines der beiden Schlitze 11 und/oder 12 erfasst und der Rohrrohling 2 an der gewünschten Trennposition mit großer Präzision gestoppt werden kann. Die beiden Schlitze 11 und 12 befinden sich dann in dem Zwischenraum zwischen den beiden Matrizen 4. Bei horizontal verfahrendem Stanzmesser 3 sind die Mittelachsen der Schlitze 11 und 12 ebenfalls horizontal ausgerichtet. Andere Winkellagen der Werkezuganordnung sind möglich. Ausgehend von dem in Fig. 5a gezeigten Zustand und anfänglicher relativer Position des Stanzmessers 3 (siehe Fig. 4a), bei der dieses entfernt vom Rohrrohling 2 positioniert ist, erfolgt, nachdem der Rohrrohling 2 in der Ablängposition A festgehalten ist, ein Vorschieben des Stanzmessers 3 in Richtung R. Anschließend taucht der erste Keilabschnitt 7 zunächst ohne Berührung in den Ablängschlitz 11 ein. Ab einer vorbestimmten Vorschubposition des Stanzmessers 3 kommen die beiden Schneidkanten 7.1 mit den Spitzen der Zentrierlappen 15 des Ablängschlitzes 11 in Berührung. Es erfolgt dann eine Zentrierung des Stanzmessers 3 bei gleichzeitiger Stauchung und Aufspreizung des Ablängschlitzes 11, nämlich an den Zentrierlappen 15. Die Winkelverhältnisse (Öffnungswinkel β₁ und Keilwinkel α₁) führen dazu, dass die Zentrierlappen 15 nach außen gespreizt werden und eine entsprechende Kraft nach außen eingeleitet wird. Dieser Zustand, bei dem die Schneidkanten 7.1 Druck auf die Zentrierlappen 15 ausüben und diese leicht aufstellen, ist in der Fig. 5b gezeigt.

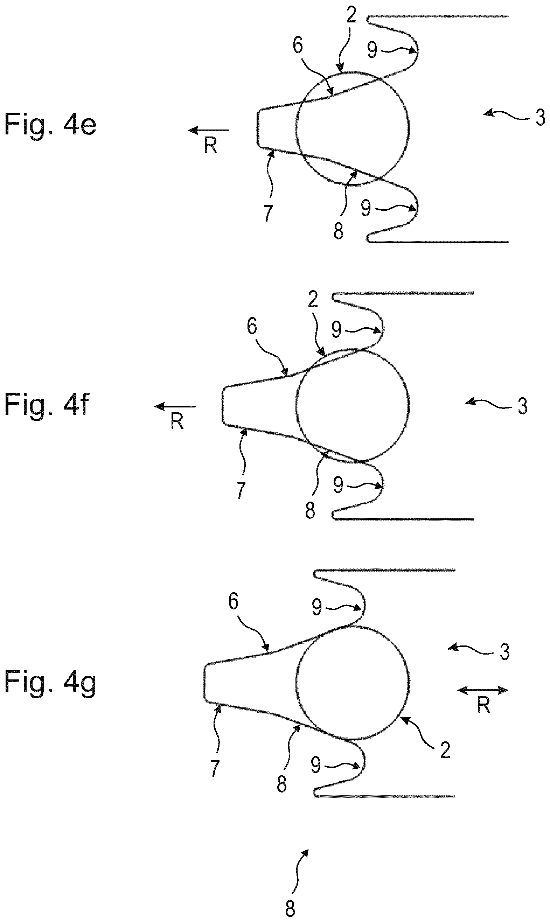

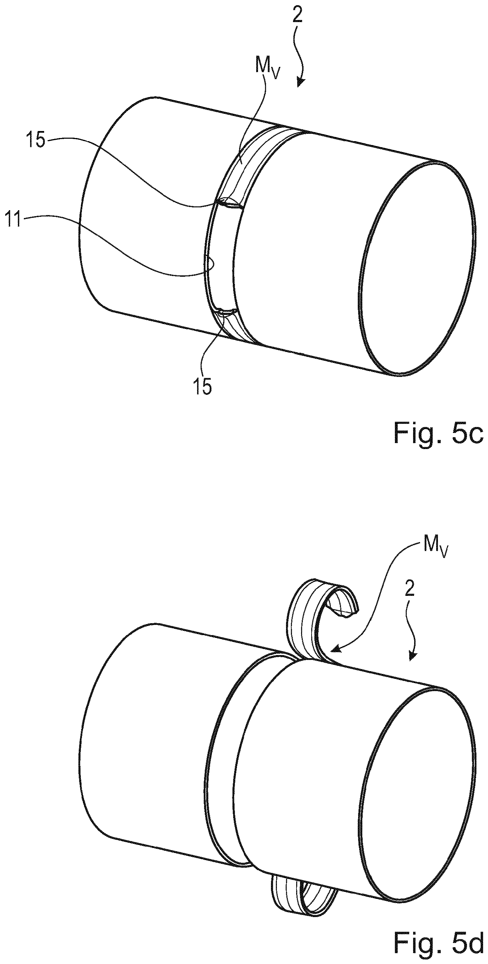

Das Stanzmesser 3 fährt nun weiter in den Rohrrohling 2 ein und der zweite Keilabschnitt 8 kommt mit seinen Schneidkanten 8.1 im Querkantenbereich des Ablängschlitzes 11 mit dem Rohrrohling 2 in Eingriff. In der Folge setzt dann aufgrund der Winkelverhältnisse ein ziehender Schnitt mittels des Stanzmessers 3 ein (siehe Fig. 4c und 4d). Das verbleibende Material Mv wird nunmehr zwischen zwei Rohrabschnitten nach außen herausgeschält und biegt sich nach außen auf (siehe Fig. 5c). Wie anhand der Fig. 4d zu erkennen ist, fährt ab einer bestimmten Stellung des Stanzmessers 3 der vordere Teil des Keilabschnitts 7 in den fensterartigen Gegenschlitz 12 ein. In einer Stellung des Stanzmessers 3, die zwischen den Stellungen aus den Fig. 4e und 4f liegt, wird nicht nur weiter Material an der rechten Seite (gemäß der Fig. 4a-4g) eingeschnitten, sondern die Schneidkanten 7.1 bzw. 8.1 kommen auch mit den Querkanten des Gegenschlitzes 12 in Eingriff und beginnen gleichzeitig mittels eines ziehenden Schnitts auch Material in Verlängerung des Gegenschlitzes 12 einzuschneiden, so dass das Material gegenläufig eingeschnitten wird und quasi zwei Einschnitte aufeinander zulaufen (siehe Fig. 4f).

Im letzten Abschnitt des Schneidhubs des Stanzmessers 3 durchtrennen die Schneidkanten 8.1 den Rohrrohling 2 vollständig. Das ist exakt in der in Fig. 4g gezeigten Stellung. Ab etwa der in Fig. 4e gezeigten Stellung wird der nach außen gebogene Span von der Spanmitnahmekerbe 9 mitgenommen und aufgrund der Form der Spanmitnahmekerbe 9 auch aufgerollt. Nach dem vollständigen Durchtrennen (siehe Fig. 4g) schieben die Spanmitnahmekerben 9 die beiden Späne (auf der Oberseite und der Unterseite) nach hinten weg. Die Spanform in der in Fig. 4g gezeigten Stellung des Stanzmessers 3 entspricht im Wesentlichen der in Fig. 5d gezeigten Form.

Mittels des erfindungsgemäßen Verfahrens wird ein sehr effizientes, schnell durchführbares Abtrennverfahren für Rohrstücke bereitgestellt, das auch im Durchlauf (getaktet oder nicht getaktet) ausführbar ist und durch das sichergestellt ist, dass kein Span in das Innere eines Rohrstücks oder in den verbleibenden Rohrrohling 2 gelangt. Die nach dem Abtrennvorgang verbleibenden Stirnflächen (zum einen des Rohrstücks und zum anderen des verbleibenden Rohrrohlings 2) können mit diesem Verfahren aufgrund des ziehenden Schnitts sehr präzise und sehr sauber, insbesondere gratfrei, ausgeführt werden. Die Breite des Stanzmessers 3 gibt dabei die entsprechende Spanbreite vor. Bei einem Rohrdurchmesser von z.B. 65 mm könnte z.B. die Breite des Stanzmessers 3 durchaus 10 mm betragen. Insofern kann ein solches Werkzeug 1 eine hohe Standzeit aufweisen, was eine industrielle Herstellung von Rohrstücken mit hohen Stückzahlen zulässt.

### Bezugszeichenliste

- 1: Werkzeug
- 2: Rohrrohling
- 3: Stanzmesser
- 4: Matrize
- 4.1: Matrizenhälfte
- 4.2: Matrizenhälfte
- 5: Matrizenöffnung
- 6: Schneidbereich
- 7: Keilabschnitt
- 7.1: Schneidkante
- 8: Keilabschnitt
- 8.1: Schneidkante
- 9: Spanmitnehmerkerbe
- 10: Bandmaterial
- 11: Ablängschlitz
- 12: Gegenschlitz
- 13: Längskante
- 14: Längskante
- 15: Zentrierlappen

- A: Ablängposition
- A_{A}: Längsachse Ablängschlitz
- A_{G}: Längsachse Gegenschlitz
- B₁: Breite erster Keilabschnitt
- B₂: Breite zweiter Keilabschnitt
- B_{A}: Breite Ablängschlitz
- B_{G}: Breite Gegenschlitz
- D: Durchmesser Rohrrohling
- L: Längsachse Bandmaterial
- L_{A}: Länge Ablängschlitz
- L_{G}: Länge Gegenschlitz
- L_{R}: Längsachse Rohrrohling
- M_{V}: verbleibendes Material
- R: Bewegungsrichtung

- α₁: erster Keilwinkel
- α₂: zweiter Keilwinkel
- β₁: Öffnungswinkel Ablängschlitz
- β₂: Öffnungswinkel Gegenschlitz

## Patentansprüche

1. Verfahren zum Abtrennen von Rohrstücken mit folgenden Schritten:
Bereitstellen eines Rohrrohlings (2) mit mindestens einem in einer vorbestimmten Ablängposition (A) angeordneten, sich in Umfangsrichtung des Rohrrohlings (2) erstreckenden Ablängschlitz (11), wobei der Ablängschlitz (11) einen Öffnungswinkel (β₁) < 180° aufweist,
Einfahren eines breiter werdenden Stanzmessers (3) quer zur Längserstreckung des Rohrrohlings (2) in den Ablängschlitz (11), wobei das Stanzmesser (3) einen Keilwinkel (α₁) aufweist, derzumindest im Bereich der anfänglichen Aufspreizung des Ablängschlitzes (11) durch das Stanzmesser (3) kleiner ist als der Öffnungswinkel (β₁) des Ablängschlitzes (11), und
Einschneiden des verbleibenden Materials (M_{V}) in Verlängerung des Ablängschlitzes (11) mittels des weiter quer zur Längserstreckung des Rohrrohlings (2) einfahrenden Stanzmessers (3), **dadurch gekennzeichnet, dass**
die Querkanten des Ablängschlitzes (11) jeweils einen vorstehenden Zentrierlappen (15) aufweisen, der einen auflaufenden, sich beim Einfahren des Stanzmessers (3) verstärkenden Aufspreizkontakt bewirkt.

2. Verfahren nach Anspruch 1, **dadurch gekennzeichnet, dass** der Ablängschlitz (11) einen Öffnungswinkel (β₁) im Bereich von 30° bis 70°, bevorzugt 35° bis 55°, aufweist.

3. Verfahren nach Anspruch 1, **dadurch gekennzeichnet, dass** beim Einschneiden des verbleibenden Materials (Mv) ein ziehender Schnitt über einen Umfangswinkel von mindestens 180° durchgeführt wird.

4. Verfahren nach einem der Ansprüche 1 bis 3, **dadurch gekennzeichnet, dass** das Stanzmesser (3) einen ersten Keilwinkel (α₁) im Bereich der anfänglichen Aufspreizung und einen zweiten Keilwinkel (α₂) im Hauptbereich des Einschneidevorgangs aufweist, wobei der zweite Keilwinkel (α₂) größer ist als der erste Keilwinkel (α₁).

5. Verfahren nach Anspruch 4, **dadurch gekennzeichnet, dass** der erste Keilwinkel (α₁) im Bereich von 20° bis 30° und der zweite Keilwinkel (α₂) im Bereich von 35° bis 45° liegt.

6. Verfahren nach einem der Ansprüche 1 bis 5, **dadurch gekennzeichnet, dass** im Rohrrohling (2) an der Ablängposition (A) ein dem Ablängschlitz (11) diametral gegenüberliegender und von diesem getrennter Gegenschlitz (12) angeordnet wird und das Stanzmesser (3) zuerst in den Ablängschlitz (11) und anschließend in den Gegenschlitz (12) einfährt, wobei das Stanzmesser (3) bevorzugt einen Keilwinkel (α₁) aufweist, der zumindest im Bereich der anfänglichen Aufspreizung des Gegenschlitzes (12) durch das Stanzmesser (3) kleiner ist als der Öffnungswinkel (β₂) des Gegenschlitzes (12).

7. Verfahren nach Anspruch 6, **dadurch gekennzeichnet, dass** der Gegenschlitz (12) einen Öffnungswinkel (β₂) im Bereich von 40° bis 80°, bevorzugt 50° bis 70°, aufweist.

8. Verfahren nach Anspruch 6 oder 7, **dadurch gekennzeichnet, dass** beim Einschneiden des verbleibenden Materials (Mv) zunächst ausgehend vom Ablängschlitz (11) ein ziehender Schnitt und anschließend bzw. gleichzeitig ausgehend vom Gegenschlitz (12) ein entgegenkommender ziehender Schnitt durchgeführt wird.

9. Verfahren nach Anspruch 8, **dadurch gekennzeichnet, dass** die vorstehenden Zentrierlappen (15) des Ablängschlitzes (11) eine Art Dreiecksform mit einander zuweisenden Spitzen für einen auflaufenden, sich verstärkenden Aufspreizkontakt aufweisen.

10. Verfahren nach einem der Ansprüche 1 bis 9, **dadurch gekennzeichnet, dass** zum Bereitstellen des Rohrrohlings (2) ein Bandmaterial (10) in vorbestimmten Ablängpositionen (A) mit einem Ablängschlitz (11) oder einem Ablängschlitz (11) und einem später am Rohrrohling (2) diametral gegenüberliegenden Gegenschlitz (12), bevorzugt mittels eines Stanzvorgangs, versehen wird bzw. werden, und
das Bandmaterial (10) quer zur Längserstreckung in eine Rohrform gebracht und die Längsstoßkanten (13, 14) miteinander verbunden werden.

11. Verfahren nach einem der Ansprüche 1 bis 10, **dadurch gekennzeichnet, dass** das Stanzmesser (3) im Anschluss an den Hauptschneidbereich eine Spanmitnahmekerbe (9) aufweist, deren Spanaufnahmeöffnung in Einfahrrichtung des Stanzmessers (3) nach vorne weist.

12. Verfahren nach einem der Ansprüche 1 bis 11, **dadurch gekennzeichnet, dass** der Rohrrohling (2) auf beiden Seiten des Ablängschlitzes (11) und ebenfalls des Gegenschlitzes (12) in einer ringförmigen Schneidmatrize (4) gehalten ist und das Stanzmesser (3) zwischen die beiden Schneidmatrizen (4) einfährt.

13. Verwendung eines Rohrrohlings (2) mit mindestens einem, in einer vorbestimmten Ablängposition (A) angeordneten, sich in Umfangsrichtung des Rohrrohlings (2) erstreckenden Ablängschlitzes (11) in einem Verfahren nach einem der Ansprüche 1 bis 12.

14. Verwendung eines Stanzmessers (3) mit einem an einem in einen Rohrrohling (2) angebrachten Ablängschlitz (11) angepassten Keilwinkel (α₁, α₂) mit Zentrier-, anfänglicher Aufspreiz- und ziehender Schnittfunktion in einem Verfahren nach einem der Ansprüche 1 bis 12.

## Claims

1. A method for separating pipe sections, comprising the following steps:
providing a pipe blank (2) with at least one cut-off slot (11) arranged in a predetermined cut-to-length position (A) and extending in the circumferential direction of the pipe blank (2), the cut-off slot (11) having an opening angle (β₁) < 180°,
insertion of a broadening cutting die (3) transversely to the longitudinal extent of the tube blank (2) into the cut-off slot (11), the cutting die (3) having a wedge angle (α₁) which, at least in the region of the initial spreading of the cut-off slot (11) by the cutting die (3), is smaller than the opening angle (β₁) of the cut-off slot (11), and
cutting in the remaining material (M_{V}) in extension of the cut-off slot (11) by means of the cutting die (3) which moves in further transversely to the longitudinal extent of the tube blank (2),
**characterized in that** the transverse edges of the cut-off slot (11) each have a projecting centering lug (15) which brings about an expanding contact which increases as the cutting die (3) is retracted.

2. Method according to claim 1, **characterized in that** the cut-off slot (11) has an opening angle (β₁) in the range from 30° to 70°, preferably 35° to 55°.

3. Method according to claim 1, **characterized in that** a pulling cut is performed over a circumferential angle of at least 180°, when the remaining material (M_{V}) is in cut.

4. Method according to any one of claims 1 to 3, **characterized in that** the cutting die (3) has a first wedge angle α₁) in the region of initial spreading and a second wedge angle (α₂) in the main region of the cutting-in operation, the second wedge angle (α₂) being greater than the first wedge angle (α₁).

5. Method according to claim 4, **characterized in that** the first wedge angle α₁) is in the range of 20° to 30° and the second wedge angle (α₂) is in the range of 35° to 45°.

6. Method according to one of claims 1 to 5, **characterized in that** a counter-slot (12), which is diametrically opposite the cut-off slot (11), is arranged separated therefrom and in the tube blank (2) at the cutting position (A), and wherein the cutting die (3) first enters the cut-off slot (11) and then the counter-slot (12), wherein the cutting die (3) preferably has a wedge angle α₁) which, at least in the region of the initial spreading of the counter-slot (12) by the cutting die (3), is smaller than the opening angle (β₂) of the counter-slot (12).

7. Method according to claim 6, **characterized in that** the counter-slot (12) has an opening angle (β₂) in the range of 40° to 80°, preferably of 50° to 70°.

8. Method according to claim 6 or 7, **characterized in that**, when the remaining material (M_{V}) is cut in, first a drawing cut is made starting from the cut-off slot (11) and then or simultaneously an oncoming drawing cut is made starting from the counter-slot (12).

9. Method according to claim 8, **characterized in that** the protruding centering tabs (15) of the cut-off slot (11) have a kind of triangular shape with tips facing each other for an accumulating, reinforcing spreading contact.

10. Method according to any one of claims 1 to 9, **characterized in that**, for providing the tube blank (2), a strip material (10) is provided in predetermined cut-to-length positions (A) with a cut-off slot (11) or with a cut-off slot (11) and a counter-slot (12), which later on the tube blank (2) is diametrically opposite the cut-off slot (11), preferably by means of a punching operation, and
that the strip material (10) is brought into a tube shape transversely to the longitudinal extension and the longitudinal joint edges (13, 14) are joined together.

11. Method according to one of claims 1 to 10, **characterized in that** the cutting die (3) has a chip catching notch (9) adjacent to the main cutting area, wherein its chip catching opening points forward in the direction of insertion of the cutting die (3).

12. Method according to one of the claims 1 to 11, **characterized in that** the pipe blank (2) is held on both sides of the cut-off slot (11) and further of the counter-slot (12) in an annular cutting die tool (4) and the cutting die (3) enters between the two cutting die tools (4).

13. Use of a pipe blank (2) with at least one cut-off slot (11) arranged in a predetermined cut-to-length position (A) and extending in the circumferential direction of the pipe blank (2) in a method according to one of claims 1 to 12.

14. Use of a cutting die (3) with a wedge angle (α₁, α₂) adapted to a cut-off slot (11) provided in a tube blank (2) with centering, initial spreading and drawing cutting functions in a method according to any one of claims 1 to 12.

## Revendications

1. Procédé de séparation de pièces tubulaires comprenant les étapes suivantes :
fournir une ébauche tubulaire (2) comprenant au moins une fente de mise à longueur (11) agencée dans une position de mise à longueur prédéterminée (A) et s'étendant dans la direction périphérique de l'ébauche tubulaire (2), dans lequel la fente de mise à longueur (11) présente un angle d'ouverture (β₁) inférieur à 180°,
insérer une lame de découpage (3) qui devient plus large, transversalement à l'étendue longitudinale de l'ébauche tubulaire (2) dans la fente de mise à longueur (11), dans lequel la lame de découpage (3) présente un angle de coin (α₁) qui, au moins dans la région de l'écartement initial de la fente de mise à longueur (11) par la lame de découpage (3), est inférieur à l'angle d'ouverture (β₁) de la fente de mise à longueur (11), et
découper le matériau restant (Mv) dans le prolongement de la fente de mise à longueur (11) au moyen de la lame de découpage (3) pénétrant encore plus transversalement par rapport à l'étendue longitudinale de l'ébauche tubulaire (2), **caractérisé en ce que** les bords transversaux de la fente de mise à longueur (11) présentent chacun une languette de centrage en saillie (15) qui produit un contact d'écartement croissant renforcé lors du retrait de la lame de découpage (3).

2. Procédé selon la revendication 1, **caractérisé en ce que** la fente de mise à longueur (11) présente un angle d'ouverture (β₁) dans la plage de 30° à 70°, de préférence de 35° à 55°.

3. Procédé selon la revendication 1, **caractérisé en ce que,** lors du découpage du matériau restant (Mv), une coupe par traction est effectuée sur un angle périphérique d'au moins 180°.

4. Procédé selon l'une quelconque des revendications 1 à 3, **caractérisé en ce que** la lame de découpage (3) présente un premier angle de coin (α₁) dans la zone de l'écartement initial et un second angle de coin (α₂) dans une zone principale du processus de découpage, le second angle de coin (α₂) étant supérieur au premier angle de coin (α₁).

5. Procédé selon la revendication 4, **caractérisé en ce que** le premier angle de coin (α₁) se situe dans la plage de 20° à 30° et le second angle de coin (α₂) se situe dans la plage de 35° à 45°.

6. Procédé selon l'une quelconque des revendications 1 à 5, **caractérisé en ce qu'**une contre-fente (12) diamétralement opposée à la fente de mise à longueur (11) et séparée de celle-ci est agencée dans l'ébauche tubulaire (2) dans la position de mise à longueur (A), et **en ce que** la lame de découpage (3) se déplace d'abord dans la fente de mise à longueur (11), puis dans la contre-fente (12), dans lequel la lame de découpage (3) présente de préférence un angle de coin (α₁) qui est inférieur à l'angle d'ouverture (32) de la contre-fente (12), au moins dans la zone de l'écartement initial de la contre-fente (12) par la lame de découpage (3).

7. Procédé selon la revendication 6, **caractérisé en ce que** la contre-fente (12) présente un angle d'ouverture (32) dans la plage de 40° à 80°, de préférence de 50° à 70°.

8. Procédé selon la revendication 6 ou 7, **caractérisé en ce que,** lors du découpage du matériau restant (Mv), une coupe par traction à partir de la fente de mise à longueur (11) est d'abord effectuée, et ensuite, ou en même temps, à partir de la contre-fente (12), une coupe par traction opposée est effectuée.

9. Procédé selon la revendication 8, **caractérisé en ce que** les languettes de centrage en saillie (15) de la fente (11) ont une forme triangulaire avec des sommets se faisant face pour un contact d'écartement croissant renforcé.

10. Procédé selon l'une quelconque des revendications 1 à 9, **caractérisé en ce que,** pour réaliser l'ébauche tubulaire (2), un matériau en bande (10) est pourvu, dans des positions de mise longueur prédéterminées(A), d'une fente de mise à longueur à la longueur (11) ou d'une fente de mise à longueur (11) et d'une contre-fente (12) qui se trouve ensuite diamétralement opposée à l'ébauche tubulaire (2), de préférence au moyen d'une opération de découpage, et
le matériau en bande (10) est amené dans une forme tubulaire transversalement à l'extension longitudinale et les bords longitudinaux de butée (13, 14) sont reliés l'un à l'autre.

11. Procédé selon l'une des revendications 1 à 10, **caractérisé en ce que** la lame de découpage (3) présente une encoche d'évacuation des copeaux (9) suivant la zone de coupe principale, dont l'ouverture de réception de puce est dirigée vers l'avant dans la direction d'insertion de la lame de découpage (3).

12. Procédé selon l'une quelconque des revendications 1 à 11, **caractérisé en ce que** l'ébauche tubulaire (2) est maintenue dans une matrice de découpage annulaire (4) des deux côtés de la fente de mise à longueur (11) et également de la contre-fente (12), et **en ce que** la lame de découpage (3) se déplace entre les deux matrices de découpage (4).

13. Utilisation d'une ébauche tubulaire (2) comprenant au moins une fente de mise à longueur (11) agencée dans une position de mise à longueur prédéterminée (A) et s'étendant dans la direction circonférentielle de l'ébauche tubulaire (2) dans un procédé selon l'une des revendications 1 à 12.

14. Utilisation d'une lame de découpage (3) comprenant un angle de coin (α₁, α 2) adapté à une fente de mise à longueur (11) réalisée dans une ébauche tubulaire (α₁, α₂) et ayant une fonction de coupe de centrage, d'écartement initial et par traction dans un procédé selon l'une des revendications 1 à 12.
